# DEMANDE DE BREVET EUROPEEN

(11) **EP 2 230 142 A1**
(43) Date de publication de la demande: **22.09.2010**
(21) Numéro de dépôt: 10156643.8
(22) Date de dépôt: 16.03.2010
(51) Int. Cl.: B60S 5/06

(54) **Procédé interactif d'échange d'un système de stockage d'énergie d'un véhicule électrique ou partiellement électrique**

(30) Priorité: 16.03.2009 FR 0951629
(71) Demandeur: Peugeot Citroën Automobiles SA, 78140 Vélizy-Villacoublay (FR)
(72) Inventeur: Porcellato, Denis, 78450 Chavenay (FR)

(57) **Abrégé**

La présente invention concerne un procédé interactif d'échange d'une batterie (2) d'un véhicule (1) électrique ou partiellement électrique dans lequel un superviseur (96) de véhicule communique à une borne (23) d'échange de batteries par radio-fréquence un signal d'information relatif aux caractéristiques de la batterie à échanger. La borne (23) d'échange informe alors la centrale (3) de stockage pour savoir si une batterie chargée de ce type est disponible, et si la réponse est positive, la batterie déchargée est envoyée vers la centrale (3) de stockage, tandis qu'une batterie chargée est installée à l'intérieur du véhicule. On utilise de préférence un outil robotisé (19) en association avec un système de convoyeurs (13, 14) pour acheminer la batterie de rechange et celle déchargée du véhicule.

## Description

. La présente invention concerne un procédé interactif d'échange d'un système de stockage d'énergie d'un véhicule électrique ou partiellement électrique. On entend par véhicule partiellement électrique un véhicule hybride comportant un moteur thermique fonctionnant en combinaison avec une machine électrique.

. L'invention trouve une application particulièrement avantageuse, mais non exclusive, avec les véhicules comportant une chaîne de traction électrique ou hybride connectable à un réseau électrique pour effectuer leur recharge (Véhicule de type plug-in). Cette invention peut être mise en oeuvre avec tous les dispositifs de stockage électrochimiques, tels que les batteries Li-ion, NiMH, Ni-Zn, et les supercondensateurs.

. Les véhicules électriques et hybrides plug-in sont conçus aujourd'hui avec un dispositif de stockage couvrant la vie du véhicule qui ne permet pas d'utiliser ces véhicules pour de grands parcours en traction électrique pure.

. En effet, l'autonomie d'un véhicule est limitée par la masse du dispositif de stockage embarquable et son coût. Généralement, les véhicules embarquent un dispositif de stockage de 20 kWh, ce qui permet au véhicule d'avoir une autonomie d'environ 200km si le dispositif de stockage est de technologie lithium. Une telle énergie embarquée correspond à un système de stockage d'environ 200 kg ayant aujourd'hui un coût très élevé.

. Aujourd'hui, l'utilisateur est habitué à pouvoir remplir le réservoir de son véhicule en 5 minutes environ, ce qui confère une autonomie comprise entre 700 et 1000 km. Malheureusement, la technologie actuelle des dispositifs de stockage ne permet pas de les recharger aussi rapidement. Les meilleures technologies permettent une recharge rapide en une demi-heure de 80% de l'autonomie, soit environ 160 km d'autonomie.

. Si toutefois la technologie permettait de recharger en 5 minutes pour recouvrir l'autonomie totale du véhicule, c'est-à-dire 200 km, ceci nécessiterait des infrastructures électriques non disponibles. En effet, si une autonomie de 200 km correspond à un dispositif de stockage de 30 kWh, charger en 5 minutes suppose un système de distribution ayant une puissance de 360 kW. En considérant une station d'autoroute où 10 bornes débitent en même temps, ce système de distribution impliquerait la mise en oeuvre d'une puissance de 3,6 MW soit un tiers de tranche nucléaire (1 GW), ce qui n'est pas envisageable actuellement.

. Une solution pour pouvoir disposer d'une pleine autonomie en 5 minutes est donc de pouvoir échanger le dispositif de stockage du véhicule dans la station service par un autre dispositif de stockage qui aura été préalablement chargé en plusieurs heures dans une centrale de stockage dédiée. On peut supposer cette centrale à côté de la station service qui utilise l'énergie nucléaire couplée avec toutes les sources renouvelables possibles, telles que l'énergie solaire, ou des éoliennes.

. L'invention a notamment pour but de faciliter l'échange du dispositif de stockage d'énergie à chaque centrale de stockage.

. A cet effet, dans l'invention, le véhicule comporte un superviseur en relation avec une borne d'échange associée à une centrale de stockage. Le superviseur communique avec la borne d'échange par radio-fréquence un signal d'information relatif aux caractéristiques de la batterie à échanger, telles que la technologie électrochimique, la tension nominale, la tension maximale, la tension minimale, ou la capacité de cette batterie.

. La borne d'échange informe alors la centrale de stockage pour savoir si une batterie chargée de ce type est disponible, et si la réponse est positive, la batterie déchargée est envoyée vers la centrale de recharge, tandis qu'une batterie chargée est installée à l'intérieur du véhicule.

. On utilise de préférence un outil robotisé en association avec un système de convoyeurs pour acheminer la batterie de rechange et évacuer la batterie déchargée du véhicule.

. De préférence, des précautions sont prises pour protéger le véhicule et les personnes dans le rayon d'action du robot.

. L'invention concerne donc un procédé pour échanger un dispositif de stockage d'énergie, ou batterie, d'un véhicule électrique ou partiellement électrique **caractérisé en ce que :**
- le véhicule comportant un superviseur en relation avec une borne d'échange associée à une centrale de stockage de batteries, il comporte les étapes suivantes :

- le superviseur communique à la borne d'échange par radio-fréquence un signal d'information relatif aux caractéristiques de la batterie déchargée à échanger, telles que la technologie électrochimique, la tension nominale, la tension maximale, la tension minimale, ou la capacité,
- la borne d'échange demande à la centrale de stockage si une batterie chargée ayant des caractéristiques de ce type est disponible, et si la réponse est positive, la batterie déchargée est envoyée vers la centrale de stockage, tandis qu'une batterie chargée issue de la centrale de stockage est installée à l'intérieur du véhicule en lieu et place de la batterie déchargée.

. Selon une mise en oeuvre, le superviseur du véhicule communique en outre l'état de charge de la batterie de sorte que la borne d'échange connaissant le coût de l'unité d'énergie électrique calcule le montant de la somme dont l'utilisateur doit s'acquitter pour l'échange de la batterie.

. Selon une mise en oeuvre, avant d'autoriser l'échange de la batterie, le superviseur de véhicule commande la mise hors tenson de la batterie en ouvrant un interrupteur positionné en série à l'intérieur de la batterie,
- le superviseur vérifiant que l'interrupteur est bien ouvert en envoyant un signal de contrôle sur une des bornes de la batterie, et
- si un signal de retour est détecté sur l'autre borne de la batterie on en déduit que la batterie est encore sous tension et qu'il n'est pas possible d'autoriser son changement ; en revanche, si il n'y a pas de retour de signal, on en déduit que l'interrupteur est bien ouvert, et on autorise le changement de la batterie.

. Selon une mise en oeuvre, pour effectuer l'échange de la batterie,
- un robot place la batterie déchargée du véhicule sur un premier convoyeur de batteries évacuant la batterie déchargée vers la centrale de stockage,
- un deuxième convoyeur achemine une batterie chargée issue de la centrale de stockage à proximité du robot, et
- le robot place à l'intérieur du véhicule la batterie chargée en lieu et place de la batterie déchargée.

. Selon une mise en oeuvre, le robot commence l'échange de la batterie lorsque ledit robot détecte au moyen d'un système de vision par caméra qu'aucun obstacle humain ou matériel ne se situe dans une zone d'action correspondant à la zone dans laquelle le robot est susceptible d'évoluer lors de l'opération d'échange de batterie et dès qu'il détecte un obstacle dans la zone d'action, il s'arrête automatiquement afin d'assurer une sécurité totale à l'utilisateur.

. Selon une mise en oeuvre, avant que le robot commence l'échange de la batterie, un message lumineux et/ou sonore émis par la borne d'échange signale à l'utilisateur de libérer la zone d'action du robot.

. Selon une mise en oeuvre, la batterie est installée sur un tiroir coulissant à l'intérieur d'une enveloppe fixée à l'intérieur du véhicule, de manière à passer d'une position fermée dans laquelle la batterie est située à l'intérieur du véhicule, à une position ouverte dans laquelle la batterie est en partie située à l'extérieur du véhicule pour permettre l'échange de la batterie.

. Selon une mise en oeuvre, le tiroir étant verrouillé lorsqu'il se trouve en position fermé au moyen d'un mécanisme de verrouillage magnétique, lorsque le changement de batterie est commandé, le superviseur du véhicule déverrouille le tiroir en alimentant le verrou électromagnétique du mécanisme.

. Selon une mise en oeuvre, un signal lumineux et/ou sonore indique que le tiroir de batterie est déverrouillé.

. Selon une mise en oeuvre, lorsque le tiroir arrive en fin de course en position ouverte le superviseur du véhicule commande le verrouillage du tiroir au moyen d'un deuxième mécanisme de verrouillage magnétique.

. Selon une mise en oeuvre, un signal lumineux et/ou sonore indique que le tiroir est verrouillé en position ouverte.

. Selon une mise en oeuvre, une fois que la batterie déchargée a été remplacée par une nouvelle batterie, le superviseur de la batterie communique au superviseur du véhicule les caractéristiques de la nouvelle batterie et, s'il y a lieu, son état de charge.

. Selon une mise en oeuvre, une fois que la batterie a été échangée le superviseur de véhicule commande la mise sous tenson de la batterie en fermant l'interrupteur positionné en série à l'intérieur de la batterie.

. L'invention sera mieux comprise à la lecture de la description qui suit et à l'examen des figures qui l'accompagnent. Ces figures ne sont données qu'à titre illustratif mais nullement limitatif de l'invention. Elles montrent :

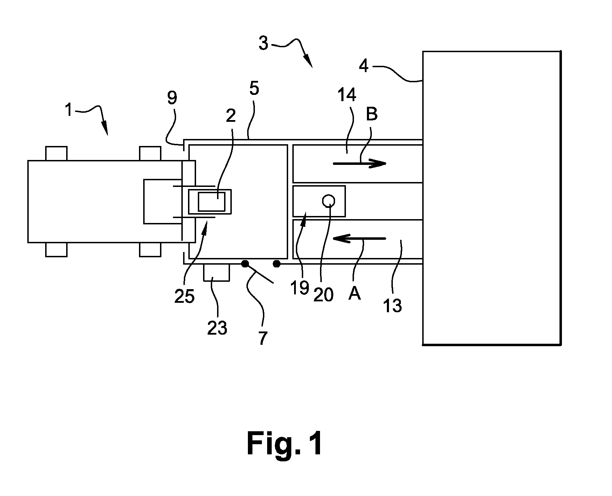

. Figure 1 : une représentation schématique d'un véhicule positionné à proximité d'une centrale de stockage pour effectuer l'échange de la batterie du véhicule ;

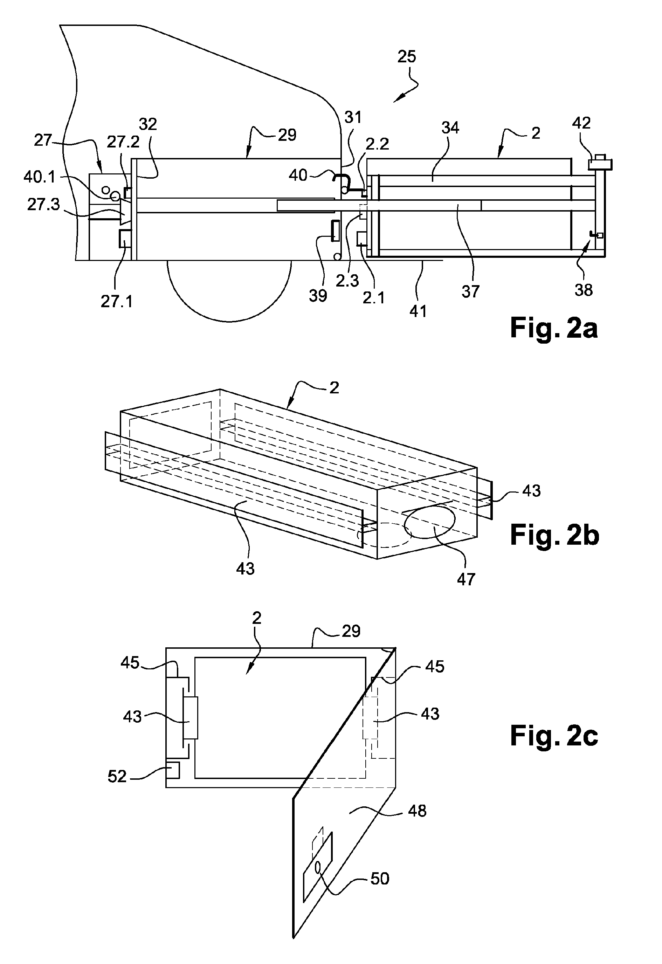

. Figure 2a : une vue de côté d'un véhicule hybride selon l'invention équipé d'un mécanisme à tiroir sur lequel est installé la batterie ;

. Figures 2b-2c : des représentations schématiques d'une variante de réalisation du mécanisme à tiroir ;

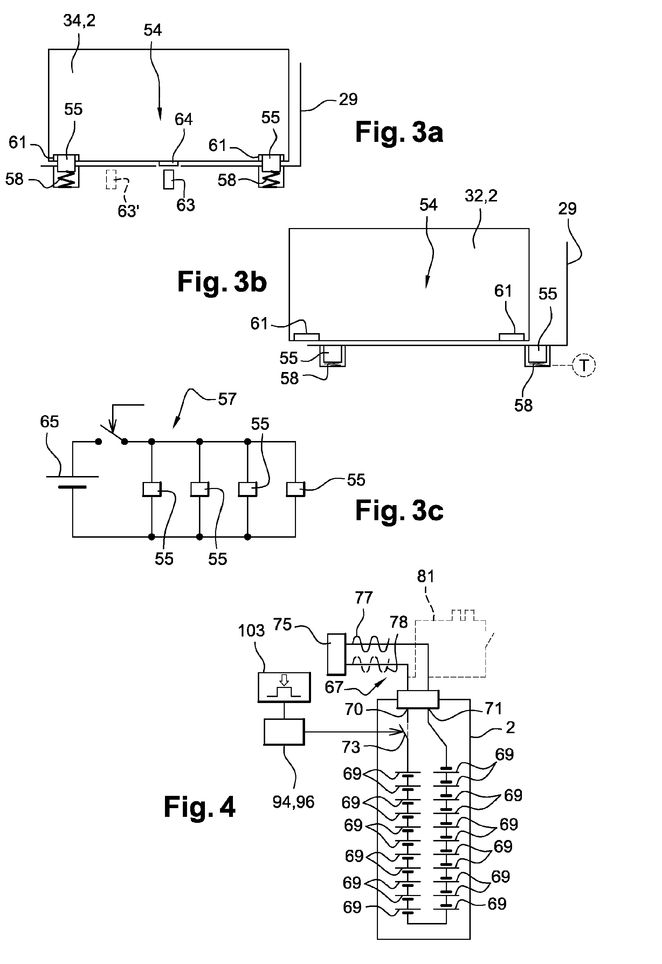

. Figures 3a-3c : des représentations schématiques d'un mécanisme de verrouillage du mécanisme à tiroir du véhicule en position verrouillée et déverrouillée et de son circuit de commande ;

. Figure 4 : une représentation schématique d'un système de vérification de la mise hors tension de la batterie ;

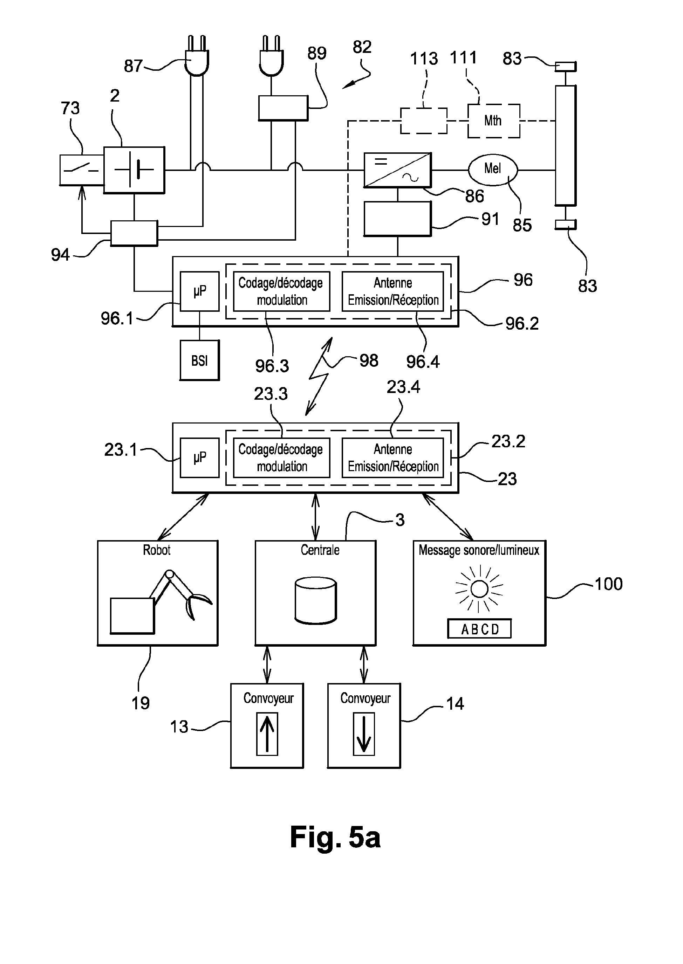

. Figure 5a : une représentation schématique d'un superviseur du véhicule communiquant via une liaison radio avec une borne d'échange ;

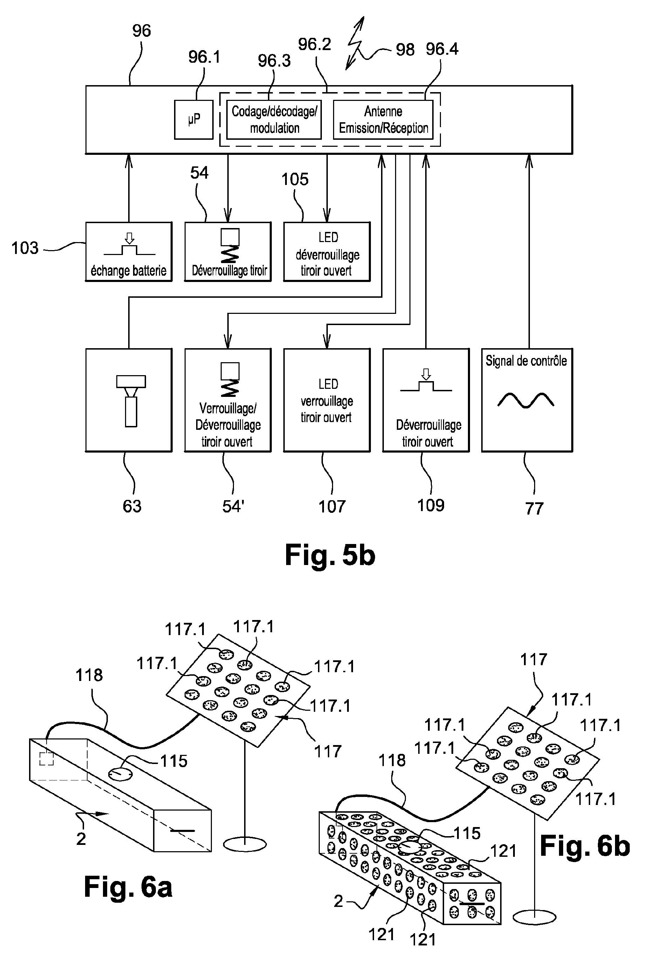

. Figure 5b : une représentation schématique des étages du superviseur du véhicule et des différentes organes d'entrée et de sortie avec lesquels il est susceptible de communiquer ;

. Figures 6a-6b : des représentations schématiques de batteries équipées d'un indicateur d'état de charge aptes à être rechargées par des cellules photovoltaïques.

. Les éléments identiques conservent la même référence d'une figure à l'autre.

. La Figure 1 montre un véhicule 1 équipé d'un dispositif 2 de stockage d'énergie, appelé plus simplement batterie dans la suite du document, alimentant une machine électrique assurant la traction du véhicule. Le véhicule 1 est positionné à proximité d'une centrale 3 d'échange pour effectuer l'échange de la batterie 2 déchargée.

. Plus précisément, la centrale 3 d'échange comporte une zone 4 de stockage dans laquelle sont stockées des batteries qui ont été rechargées et deux convoyeurs 13, 14 permettant respectivement l'acheminement d'une batterie chargée de la zone 4 de stockage vers le véhicule et l'évacuation de la batterie 2 déchargée vers la zone 4 de stockage.

. De préférence, un robot 19 permet d'effectuer automatiquement l'échange de la batterie 2. Lors de l'échange, le robot 19 place d'abord la batterie 2 déchargée sur le convoyeur 14, puis une batterie chargée issue de la zone 4 étant acheminée par le convoyeur 13 à proximité du robot 19, le robot 19 positionne cette batterie chargée à l'intérieur du véhicule en lieu et place de la batterie 2 déchargée.

. De préférence, une enceinte 5 fermée par une porte 7 d'accès délimite notamment la zone d'action du robot. Cette enceinte 5 présente une face 9 en partie ouverte pour permettre le passage de la batterie 2 à l'intérieur de l'enceinte 5. A cet effet, la batterie 2 est positionnée sur un système 25 coulissant représenté sur les figures 2 permettant à la batterie 2 de pénétrer à l'intérieur de l'enceinte 5 par l'intermédiaire de l'ouverture ménagée dans la face 9 lorsque le système 25 est en position ouverte (voir Figure 2a), le véhicule demeurant de préférence à l'extérieur de l'enceinte 5 pour éviter tout risque de détérioration lors de l'échange.

. Le robot 19 est équipé de préférence d'un système 20 de vision par caméra, de sorte que lorsqu'aucun obstacle humain et matériel n'est détecté dans l'enceinte 5, le robot 19 commence à effectuer l'échange de batterie 2, mais dès qu'un obstacle est détecté dans l'enceinte 5, le robot 19 est arrêté automatiquement.

. De préférence, la porte 7 est verrouillée de l'extérieur une fois que l'opération d'échange est enclenchée, afin que l'utilisateur ne puisse pas entrer dans l'enceinte 5 lors de l'échange. Dès que l'opération d'échange est terminée, la porte 7 est déverrouillée.

. La centrale 3 comporte en outre une borne 23 d'échange apte à échanger des informations via une liaison radio avec un superviseur 96 du véhicule et à commander notamment les différents organes 13, 14, 19 de la centrale 3, comme exposé ci-après avec les Figures 5.

. Pour faciliter l'accès à la batterie 2, comme représenté sur la Figure 2a, le véhicule 1 est équipé de préférence d'un système 25 coulissant destiné à recevoir la batterie 2.

. Ce système 25 comporte un support 27 de connexions comportant des connecteurs de puissance 27.1 et de bus d'information 27.2 et/ou un conduit 27.3 d'aération aptes à entrer en coopération respectivement avec des connecteurs de puissance 2.1 et de bus d'information 2.2 et/ou un circuit d'aération 2.3 de la batterie 2.

. Le système 25 comporte en outre une enveloppe 29 installée à l'intérieur du véhicule présentant un côté 31 ouvert débouchant vers l'extérieur du véhicule pour recevoir la batterie 2. Cette enveloppe 29 est positionnée en regard du support 27 de connexions. L'enveloppe 29 est ajourée en son fond 32 pour permettre le passage des connecteurs 2.1-2.3 de la batterie 2 lorsque le système est en position fermée.

. Le système 25 coulissant comporte un tiroir 34 destiné à recevoir la batterie 2 et apte à coulisser à l'intérieur de l'enveloppe 29 au moyen d'un système 37 à glissière installé entre l'enveloppe 29 et le tiroir 34. Le tiroir 34 peut ainsi se déplacer en translation à l'intérieur de l'enveloppe 29 pour passer d'une position fermée dans laquelle le tiroir 34 est entré à l'intérieur de l'enveloppe 29 de sorte que la batterie 2 est connectée avec le support 27, à une position ouverte dans laquelle le tiroir 34 se trouve à au moins en partie l'extérieur de l'enveloppe 29 pour permettre le remplacement de la batterie 2. De préférence, le système 37 à glissière permet au tiroir 34 de sortir complètement de l'enveloppe 29 en position ouverte pour faciliter la préhension de la batterie 2.

. Le tiroir 34 peut être actionné au moyen d'une poignée 38 quart de tour destinée à entrer en coopération avec une butée 39 solidaire de l'enveloppe 29. La poignée 38 est reliée à un crochet 40 par l'intermédiaire d'un système de tringlerie (non représenté) permettant de solidariser le tiroir avec le support 27 en prenant appui sur une barre 40.1.

. Selon une réalisation, la partie du hayon 41 s'escamote pour supporter le tiroir 34 lorsque ce dernier est en position ouverte.

. Le système 25 de coulissement peut également comporter des fixations 42 mécaniques de type fixation grenouillère susceptible de lier la face avant du tiroir 34 à l'enveloppe 29.

. En variante, dans une autre réalisation du système 25 de coulissement montrée sur les Figures 2b et 2c, la batterie 2 comporte des rails 43 qui s'étendent suivant l'allongement de la batterie 2 destinés à venir se loger dans des glissières 45 ménagées dans des faces internes de l'enveloppe 29. La batterie 2 peut également être munie d'une poignée 47 amovible sur sa partie arrière pour faciliter sa préhension. Par ailleurs, l'enveloppe 29 peut être fermée par une porte 48 comprenant une poignée 50 quart de tour destinée à entrer en coopération avec une butée 52 solidaire de l'enveloppe 29.

. Comme représenté sur la Figure 3a, le véhicule 1 peut également être équipé d'un mécanisme 54 de verrouillage permettant de bloquer en translation le tiroir 34 ou la batterie 2 avec l'enveloppe 29 ou le châssis du véhicule une fois que le tiroir 34 se trouve en position fermée.

. Ce mécanisme 54 comporte des verrous 55 magnétiques fixés sur le châssis ou l'enveloppe 29 en relation avec un circuit 57 électrique montré sur la Figure 3c commandé par exemple par le superviseur du dispositif de stockage ou le superviseur du véhicule. Ces verrous 55 sont montés sur des ressorts 58 de rappel et entrent en coopération avec des ouvertures 61 ménagées dans le tiroir 34 ou la batterie 2.

. En position désamorcée montrée sur la Figure 3a, lorsque les verrous 55 magnétiques ne sont pas mis sous tension par le circuit 57 magnétique, les ressorts 58 de rappel poussent les verrous 55 vers les ouvertures 61, de sorte que le tiroir 34 est bloqué en translation à l'intérieur de l'enveloppe 29 lorsqu'il se trouve en position fermée. En position amorcée montrée sur la Figure 3b, lorsque les verrous 55 magnétiques sont mis sous tension, les verrous 55 compressent les ressorts 58 de manière à dégager les ouvertures 61 et à libérer en translation le tiroir 34 qui pourra alors être ouvert par l'utilisateur pour procéder à l'échange de la batterie 2.

. En outre, le mécanisme 54 de verrouillage peut être équipé d'un capteur 63 optique installé sur le châssis associé à une cible 64 réfléchissante installée sur le tiroir 34 ou la batterie 2. Ce capteur 63 peut être utilisé pour détecter lorsque le tiroir 34 arrive en bout de course en position fermée.

. On peut également utiliser un système T de temporisation qui désamorce les verrous 55 magnétiques une fois la période de temporisation écoulée de manière à économiser la batterie 65 qui alimente le circuit 57 magnétique. Le système T de temporisation peut être hébergé par le mécanisme 54 de verrouillage lui-même ou le superviseur de la batterie 2.

. De manière analogue, le véhicule peut également comporter des moyens de verrouillage équivalents permettant de bloquer en translation le tiroir ou la batterie avec l'enveloppe 29 lorsque le tiroir 34 se trouve en position ouverte pour éviter qu'il ne se referme au cours de l'échange. Toutefois dans ce cas, en position désamorcée, les ressorts tirent les verrous pour les dégager des ouvertures de sorte que le tiroir 34 n'est pas bloquer en translation pour passer de la position fermée à la position ouverte ; alors qu'en position amorcée, les verrous poussent les ressorts et pénètrent à l'intérieur de l'ouverture 61 de manière bloquer en translation le tiroir 34 lorsqu'il se trouve en position ouverte. Un capteur optique 63' peut également être utilisé pour détecter la position ouverte du tiroir 34.

. Selon une réalisation, la batterie 2 comporte en outre des moyens 67 de sécurisation pour s'assurer que la batterie 2 est bien hors tension avant d'autoriser une intervention humaine.

. Plus précisément, la batterie 2 comporte des éléments 69 de puissance branchés en série entre deux bornes 70, 71 de sortie de la batterie 2. Les moyens 67 de sécurisation comportent un interrupteur 73 commandable situé à l'intérieur de la batterie 2 en série avec les éléments 69 de puissance et un moyen 75 pour vérifier que cet interrupteur 73 est bien en position ouverte. Ce moyen 75 peut être un circuit électronique rapporté ou formé par le superviseur 94 de la batterie 2 ou le superviseur 96 du véhicule.

. Ainsi, lorsque le processus d'échange de la batterie 2 est mis en oeuvre, le superviseur 94, 96 commande l'ouverture de l'interrupteur 73, de sorte que les bornes 70, 71 de la batterie ne soit plus sous tension afin d'éviter qu'une personne ne s'électrocute.

. Le moyen 75 de vérification envoie alors un signal 77 sur l'une des bornes 71 de la batterie et si le moyen 75 de vérification ne détecte pas de signal 78 à l'autre borne 70, cela signifie que l'interrupteur 73 est bien ouvert. Dans le cas contraire, si un signal 78 est détecté sur l'autre borne 70 après l'émission du signal 77, cela signifie que l'interrupteur 73 est toujours fermé et qu'il n'est pas possible d'autoriser un échange de la batterie 2 sans risque pour l'utilisateur.

. Dans un exemple, le moyen 75 de vérification est équipé d'un dispositif de génération de fréquence pour générer un signal 77 à une certaine fréquence afin de faciliter son identification, le moyen 75 considérant que l'interrupteur 73 n'est pas ouvert s'il détecte un signal 78 sensiblement de même fréquence sur la borne de retour.

. En variante, le superviseur 94, 96 actionne un organe 81 auxiliaire, tel qu'une résistance chauffante de la lunette arrière ou tout autre organe alimenté par la batterie 2, branché en parallèle aux bornes de la batterie 2 pour déterminer si la batterie 2 est débitée ou non par un courant. Ainsi, si lorsque l'organe 81 auxiliaire est actionné, un courant traverse la batterie 2 et alimente l'organe 81, une alarme est envoyée au superviseur pour l'informer du problème que les bornes 70, 71 de la batterie 2 sont sous tension. En revanche, si lorsque l'organe 81 auxiliaire est actionné, aucun courant ne traverse la batterie 2 et n'alimente l'organe 81, cela signifie que les bornes 70, 71 de la batterie 2 ne sont effectivement plus sous tension et l'échange de la batterie 2 peut être autorisé.

. L'ouverture de l'interrupteur 73 peut par exemple être commandée par un bouton poussoir 103 présent sur le tableau de bord du véhicule.

. La Figure 5a montre une représentation schématique d'une chaine 82 de traction du véhicule 1 de type électrique équipé d'un superviseur 96 véhicule échangeant des informations via une liaison radio avec la borne 23 d'échange de la centrale 3 de stockage.

. Plus précisément, la chaine 82 de puissance du véhicule est formée par une machine 85 électrique reliée mécaniquement aux roues 83 et électriquement à la batterie 2 par l'intermédiaire d'un dispositif onduleur 86. Lorsque la machine 85 fonctionne en mode moteur, la machine 85 prélève de l'énergie à la batterie 2, le dispositif onduleur 86 transformant alors la tension continue issue de la batterie 2 en tension alternative appliquée aux bornes de la machine 85. Tandis que lorsque la machine 85 fonctionne en mode générateur par exemple au cours d'une phase de freinage pour transformer l'énergie cinétique du véhicule en énergie électrique, l'énergie générée par la machine 85 est stockée à l'intérieur de la batterie 2, l'onduleur 86 jouant un rôle de redresseur pour transformer la tension alternative issue de la machine 85 en tension continue appliquée aux bornes de la batterie 2.

. Par ailleurs, un connecteur 87 est destiné à être relié à une borne de recharge rapide ; tandis qu'un chargeur 89 embarqué permet de transformer le signal de tension du réseau domestique en un signal de tension adapté à la batterie 2.

. L'onduleur 86 est commandé par un contrôleur 91 ; tandis que la batterie 2 et les éléments de connexions 87, 89 sont commandés par le superviseur 94 de batterie apte également à commander l'interrupteur 73 interne de la batterie. Le contrôleur 91 et le superviseur 94 sont eux-mêmes commandés par le superviseur 96 du véhicule. Le superviseur est également en relation avec un module BSI.

. Le superviseur 96 du véhicule comporte un calculateur 96.1 en relation avec un étage 96.2 de transmission radiofréquence composé d'un dispositif 96.3 assurant le codage, le décodage ainsi que la modulation de signaux 98 d'information envoyés et reçus de la borne 23 d'échange et d'une antenne 96.4 d'émission/réception pour permettre la communication radio avec la borne 23 des signaux 98 relatifs notamment aux caractéristiques de la batterie 2 et à son état de charge.

. Dans un exemple, l'antenne 96.4 d'émission/réception peut être partagée avec le système de contrôle d'accès à distance permettant de condamner et décondamner à distance le véhicule, ce système de contrôle d'accès utilisant également une antenne radio d'émission et de réception échangeant des informations avec la clef radio du conducteur.

. La borne 23 d'échange comporte bien entendu également des étages 23.1-23.4 correspondant aux étages 96.1-96.4 pour permettre le codage, le décodage, ainsi que la modulation et la démodulation des signaux 98 échangés avec le superviseur 96. La borne 23 d'échange est en relation avec le robot 19 préhenseur, un dispositif 100 d'affichage ou d'émission de signal sonore permettant d'indiquer que l'enceinte 5 est libre de tout obstacle matériel ou humain, et la centrale 3 de stockage qui commande le convoyeur 13 de batterie chargée et le convoyeur 14 de batterie déchargée.

. Comme montré sur la Figure 5b, le superviseur 96 du véhicule est en relation avec le bouton 103 poussoir indiquant que l'échange de la batterie 2 est demandé par l'utilisateur, le mécanisme 54 de déverrouillage du tiroir 34 de la batterie et un voyant 105 associé indiquant que le tiroir est déverrouillé, ainsi qu'un mécanisme 54' de verrouillage/déverrouillage du tiroir en position ouverte, le voyant 107 associé indiquant que le tiroir 34 est bloqué en position ouverte, et un bouton poussoir 109 permettant de déverrouiller le tiroir 34 en position ouverte.

. Ainsi lors d'une mise en oeuvre du procédé selon l'invention, lorsque le véhicule 1 se situe dans la position souhaitée à proximité de l'enceinte 5, comme montré sur la Figure 5a, le superviseur 96 communique alors avec la borne 23 d'échange par radio-fréquence par exemple les informations suivantes :
- les caractéristiques de la batterie à changer par exemple : technologie électrochimique, tension nominale, tension maximale, tension minimale, capacité, ainsi que s'il y a lieu
- son état de charge correspondant à son niveau de charge, et
- son état de santé correspondant à sa capacité à emmagasiner et restituer de l'énergie électrique.

. La borne 23 d'échange informe alors la centrale 4 de stockage pour savoir si une batterie de ce type chargée est disponible. L'utilisateur est informé de la réponse par exemple par un écran multifonction placé sur la borne 23 d'échange.

. Si la réponse est positive, l'utilisateur appuie par exemple sur le bouton 103 « échange batterie » placé par exemple sur le tableau de bord pour avertir le superviseur 96 de l'échange de la batterie 2 via le BSI.

. Comme montré sur la Figure 4, le superviseur 96 commande alors au superviseur 94 de batterie de mettre la batterie 2 hors tension en ouvrant l'interrupteur 73. Le superviseur 96 vérifie que l'interrupteur 73 est bien ouvert en envoyant le signal 77 de contrôle à une certaine fréquence sur une des bornes 70, 71 de la batterie 2. Si un signal 78 est détecté en retour sur l'autre borne de la batterie cela signifie que la batterie 2 est toujours sous tension et qu'il n'est pas possible d'autoriser son changement. En revanche, si il n'y a pas de retour du signal, cela signifie que l'interrupteur 73 est bien ouvert et le processus d'échange peut continuer.

. Le superviseur 96 déverrouille alors le tiroir 34 du système batterie en alimentant le verrou 55 électromagnétique. L'utilisateur est alors informé par le superviseur 96, par exemple par le voyant 105 lumineux de type LED, que le déverrouillage du tiroir 34 a été effectué.

. La borne 23, connaissant l'état de charge de la batterie 2 à échanger et le coût de l'unité d'énergie électrique, calcule la facturation correspondant à l'énergie consommée. L'utilisateur s'acquitte alors de la facturation par exemple avec une carte bancaire ou une carte spécialement dédiée à ce type de transaction (ou éventuellement en espèces).

. Comme visible sur les Figures 1 et 2a, l'utilisateur défait les fixations 42 mécaniques éventuelles qui lient la face avant du tiroir 34 à l'enveloppe 29, actionne la poignée 38 éventuelle qui lie la face avant du tiroir 34 à l'enveloppe 29. L'utilisateur ouvre le tiroir 34 de manière à faire pénétrer la batterie dans l'enceinte 5. Lorsque le tiroir 34 arrive en fin de course, le capteur 63', informe le superviseur 96 que le tiroir 34 est complètement ouvert. Le superviseur 96 commande alors le verrouillage du tiroir 34 au moyen d'un mécanisme 54' afin que celui-ci ne puisse pas se refermer lors du processus d'échange par le robot 19. Le mécanisme 54' auquel fait référence la Figure 5b est équivalent au mécanisme 54 de verrouillage/déverrouillage du tiroir 34 en position fermée montré sur les Figures 3, sauf qu'il est mis en oeuvre pour assurer le verrouillage/déverrouillage du tiroir 34 en position ouverte.

. Comme montré sur la Figure 5b, un voyant 107 lumineux de type LED s'allume alors pour indiquer que le tiroir 34 est verrouillé en position ouverte. Le superviseur 96 communique alors à la borne 23 d'échange que la batterie 2 est prête pour l'échange.

. Un message lumineux et/ou sonore 100 émis par la borne 23 signale à l'utilisateur de libérer l'enceinte 5. Une fois l'utilisateur sorti de l'enceinte 5 par la porte 7, cette dernière est verrouillée.

. Lorsque le robot 19 au moyen de son système de vision par caméra détecte qu'aucun obstacle humain ou matériel ne se situe dans l'enceinte, le robot 19 commence son travail. Dès qu'il détecte un obstacle qui vient se placer dans la zone d'action, il s'arrête automatiquement afin d'assurer une sécurité totale à l'utilisateur.

. Le robot 19 place la batterie 2 déchargée du véhicule sur le convoyeur 14 des batteries à recharger qui l'évacue vers la zone 4 de recharge. Une batterie 2 chargée issue de la zone 4 de stockage est acheminée par le convoyeur 13. Le robot 19 place ensuite la batterie 2 chargée en lieu et place de la batterie 2 déchargée dans le tiroir 34.

. Lorsque l'opération est terminée, la porte 7 est déverrouillée et un signal lumineux 100 informe l'utilisateur qu'il peut pénétrer dans l'enceinte 5. L'utilisateur appuie alors sur le bouton poussoir 109 afin que le superviseur 96 commande l'ouverture du verrou électromagnétique 54' qui bloquait le tiroir 34 en position ouverte. L'utilisateur peut alors refermer le tiroir 34 qui se bloque une fois qu'il se trouve en position fermée, et les deux voyants 105 et 107 s'éteignent.

. Le superviseur 94 de la batterie échangée communique alors avec le superviseur 96 par le connecteur 2.2 du bus de communication, sur les caractéristiques de la nouvelle batterie 2 et le cas échéant son état de charge et son état de santé. Le superviseur 94 commande alors la fermeture l'interrupteur 43, de sorte que la batterie 2 est mise sous tension, et le véhicule 1 peut alors démarrer.

. En variante, comme cela est représenté en traits discontinus sur la Figure 5a, le véhicule 1 comporte en outre un moteur 111 thermique commandé par un calculateur 113 de contrôle moteur supervisé par le superviseur 96 du véhicule, le procédé selon l'invention étant mis en oeuvre de façon analogue à ce qui vient d'être décrit pour un véhicule 1 tout électrique.

. Par ailleurs, comme montré sur la Figure 6a, chaque batterie 2 peut comporter un indicateur 115 d'état de charge permettant de suivre l'état de charge de cette dernière dernier lorsqu'elle est mise en charge hors du véhicule, dans la zone 4 de stockage par exemple.

. En outre, chaque batterie 2 peut être mis en charge sur le réseau domestique, ou une borne de recharge rapide. Comme représenté sur la Figure 6a, la batterie 2 peut également être rechargé par un système 117 déporté photovoltaïque externe présentant par exemple une forme de pupitre sur lequel sont disposés des cellules 117.1 photovoltaïques aptes à transformer de l'énergie lumineuse en énergie électrique. La batterie 2 est reliée au système 117 par l'intermédiaire d'un câble 118, mais elle pourrait également l'être par l'intermédiaire d'une liaison sans fil.

. En variante, comme représenté sur la Figure 6b, la batterie 2 peut également être recouvertes de cellules 121 photovoltaïques pour accélérer la recharge de la batterie. Cette batterie peut être rechargée indépendamment du système 117 déporté.

## Revendications

1. Procédé pour échanger un dispositif de stockage d'énergie, ou batterie (2), d'un véhicule (1) électrique ou partiellement électrique
**caractérisé en ce que**
- le véhicule (1) comportant un superviseur (96) en relation avec une borne (23) d'échange associée à une centrale (3) de stockage de batteries, il comporte les étapes suivantes :
- le superviseur (96) communique à la borne d'échange (23) par radio-fréquence un signal d'information relatif aux caractéristiques de la batterie (2) déchargée à échanger, telles que la technologie électrochimique, la tension nominale, la tension maximale, la tension minimale, ou la capacité,
- la borne d'échange (23) demande à la centrale (3) de stockage si une batterie chargée ayant des caractéristiques de ce type est disponible, et si la réponse est positive, la batterie (2) déchargée est envoyée vers la centrale (3) de stockage, tandis qu'une batterie chargée issue de la centrale (3) de stockage est installée à l'intérieur du véhicule (1) en lieu et place de la batterie (2) déchargée.

2. Procédé selon la revendication 1, **caractérisé en ce que** le superviseur (96) du véhicule communique en outre l'état de charge de la batterie (2) de sorte que la borne (23) d'échange connaissant le coût de l'unité d'énergie électrique calcule le montant de la somme dont l'utilisateur doit s'acquitter pour l'échange de la batterie (2).

3. Procédé selon la revendication 1 ou 2, **caractérisé en ce que** avant d'autoriser l'échange de la batterie (2), le superviseur (96) de véhicule commande la mise hors tenson de la batterie (2) en ouvrant un interrupteur (73) positionné en série à l'intérieur de la batterie (2),
- le superviseur (96) vérifiant que l'interrupteur (73) est bien ouvert en envoyant un signal (77) de contrôle sur une des bornes (70, 71) de la batterie, et
- si un signal (78) de retour est détecté sur l'autre borne (70, 71) de la batterie (2) on en déduit que la batterie (2) est encore sous tension et qu'il n'est pas possible d'autoriser son changement ; en revanche, si il n'y a pas de retour de signal, on en déduit que l'interrupteur (73) est bien ouvert, et on autorise le changement de la batterie (2).

4. Procédé selon l'une des revendications 1 à 3, **caractérisé en ce que** pour effectuer l'échange de la batterie (2),
- un robot (19) place la batterie (2) déchargée du véhicule (1) sur un premier convoyeur (14) de batteries (2) évacuant la batterie déchargée vers la centrale (3) de stockage,
- un deuxième convoyeur (14) achemine une batterie chargée issue de la centrale (3) de stockage à proximité du robot (19), et
- le robot (19) place à l'intérieur du véhicule la batterie chargée en lieu et place de la batterie (2) déchargée.

5. Procédé selon la revendication 4, **caractérisé en ce que** le robot (19) commence l'échange de la batterie (2) lorsque ledit robot (19) détecte au moyen d'un système (20) de vision par caméra qu'aucun obstacle humain ou matériel ne se situe dans une zone d'action correspondant à la zone dans laquelle le robot (19) est susceptible d'évoluer lors de l'opération d'échange de batterie et dès qu'il détecte un obstacle dans la zone d'action, il s'arrête automatiquement afin d'assurer une sécurité totale à l'utilisateur.

6. Procédé selon la revendication 5, **caractérisé en ce que** avant que le robot (19) commence l'échange de la batterie (2), un message lumineux et/ou sonore (100) émis par la borne (9) d'échange signale à l'utilisateur de libérer la zone d'action du robot (19).

7. Procédé selon l'une des revendications 1 à 6, **caractérisé en ce que** la batterie (2) est installée sur un tiroir (34) coulissant à l'intérieur d'une enveloppe (19) fixée à l'intérieur du véhicule (1), de manière à passer d'une position fermée dans laquelle la batterie (2) est située à l'intérieur du véhicule, à une position ouverte dans laquelle la batterie (2) est en partie située à l'extérieur du véhicule pour permettre l'échange de la batterie.

8. Procédé selon la revendication 7, **caractérisé en ce que** le tiroir (34) étant verrouillé lorsqu'il se trouve en position fermé au moyen d'un mécanisme (54) de verrouillage magnétique, lorsque le changement de batterie (2) est commandé, le superviseur (96) du véhicule déverrouille le tiroir (34) en alimentant le verrou (55) électromagnétique du mécanisme.

9. Procédé selon la revendication 8, **caractérisé en ce que** un signal lumineux et/ou sonore indique que le tiroir (34) de batterie est déverrouillé.

10. Procédé selon l'une des revendications 7 à 9, **caractérisé en ce que** lorsque le tiroir (34) arrive en fin de course en position ouverte le superviseur (96) du véhicule commande le verrouillage du tiroir (34) au moyen d'un deuxième mécanisme (54') de verrouillage magnétique.

11. Procédé selon l'une des revendications 7 à 10, **caractérisé en ce que** un signal (107) lumineux et/ou sonore indique que le tiroir (34) est verrouillé en position ouverte.

12. Procédé selon l'une des revendications 1 à 11, **caractérisé en ce que** une fois que la batterie (2) déchargée a été remplacée par une nouvelle batterie, le superviseur (94) de la batterie communique au superviseur (96) du véhicule les caractéristiques de la nouvelle batterie (2) et, s'il y a lieu, son état de charge.

13. Procédé selon la revendication 3, **caractérisé en ce que** une fois que la batterie (2) a été échangée le superviseur (96) de véhicule commande la mise sous tenson de la batterie (2) en fermant l'interrupteur (73) positionné en série à l'intérieur de la batterie (2).
